# EUROPÄISCHE PATENTSCHRIFT

(11) **EP 0 964 200 B1**
(45) Veröffentlichungstag und Bekanntmachung des Hinweises auf die Patenterteilung: **10.04.2002**
(21) Anmeldenummer: 99108487.2
(22) Anmeldetag: 30.04.1999
(51) Int. Cl.: F16L 41/00, F16L 47/00, F16L 37/00, F16L 41/08

(54) **Verbindung eines Rohrformteils mit einem Rohr**
Connection of a Tubular molding element with a Tube
Assemblage d'une Pièce tubulaire moulée avec un Tuyau

(30) Priorität: 09.06.1998 DE 29810294 U
(43) Veröffentlichungstag der Anmeldung: 15.12.1999
(73) Patentinhaber: REHAU AG + Co, 95111 Rehau (DE)
(72) Erfinder: Döll, Achim, 90475 Nürnberg (DE)

(56) Entgegenhaltungen:
- CH-A- 557 981
- DE-U- 7 101 299
- US-A- 4 438 955

## Beschreibung

Die Erfindung betrifft eine Verbindung eines Rohrformteils mit einem Rohr, wobei in das Rohr eine Öffnung eingebracht ist, die deckungsgleich zu einer Öffnung im Rohrmformteil ist, wobei an das Rohrformteil ein von dieser Öffnung wegragendes Rohrstück angeformt ist, und wobei das Rohrformteil an dem das Rohr umgreifenden Umfang offen ist.

In der DE 22 42 369 wird ein gattungsgemäßes Rohrformteil beschrieben. Damit soll eine Schweißverbindung für Sattelstücke geschaffen werden, welche weitgehend frei von gefährlichen Überlagerungsspannungen ist. Erreicht werden soll dies damit, daß an der Rohroberfläche, unabhängig von der Erstreckung des bzw. der Sattelstücke in Umfangsrichtung, eine den ganzen Rohrumfang umfassende Ringzone aufgeschmolzen wird. Vorteilhaft wird hier gesehen, daß die an der Oberfläche vorhandene Vorzugsorientierung aufgehoben wird und die Vorspannungen sich vor allem in Umfangsrichtung ausgleichen. Eine Überlagerung dieser Spannungen mit den durch die Schweißung entstehenden soll damit vermieden werden.

Dies läßt sich jedoch nur realisieren, wenn das zu verbindende Rohr noch nicht erdseitig verlegt worden ist. Hier läßt sich diese das Rohr umfassende Ringzone nicht aufschmelzen. Weiterhin nachteilig bei dieser Ausführung ist, daß die Öffnung im zu verbindenden Rohr erst nach dem Aufbringen des Sattelstückes erstellt werden kann. Dabei können Späne bzw. das herausgetrennte Rohrstück in das Lumen des zu verbindenden Rohres gelangen und an anderen Stellen zu Verstopfungen führen.

Weiterhin wird vorgeschlagen, daß zwischen das Rohr und das Sattelstück eine in der Schweißstelle verbleibende elektrisch erhitzbare Heizmatte eingelegt wird. Damit soll die den ganzen Rohrumfang umfassende Ringzone aufgeschmolzen werden.

Nachteilig bei dieser doch recht kostenintensiven Vorgehensweise zur Schaffung einer Verbindung zwischen einem Rohr und einem Verbindungsstück ist, daß das Verbindungsstück recht zeitintensiv mittels Spannbänder auf dem zu verbindenden Rohr befestigt werden muß und dann die Heizmatte mittels einer Stromquelle die sie berührenden Rohrwände auf Schweißtemperatur bringen muß.
Nachteilig wird in diesem Schutzrecht erwähnt, daß die Heizmatte und deren metallischer Heizleiter im Anschluß an die geschaffene Verbindung durchbohrt werden müssen. Dabei können einzelne Heizleiterstücke aus der geschaffenen Verbindung herausgelöst werden und mit den Durchflußmedien in Kontakt kommen.

Ein weiterer Nachteil dieser Verbindung wird darin gesehen, daß damit nur rechtwinklig zueinander verlaufende Rohre verbunden werden können. Sobald die zu verbindenden Rohre in einem bestimmten Winkel zueinander verlaufen, ist es erforderlich, in diese beschriebene Form der Verbindung zusätzliche Formteile zu integrieren und damit zusätzliche Kosten zu verursachen.

Ein weiteres gattungsgemäßes Rohrformteil wird in der Deutschen Offenlegungsschrift 2 340 792 beschrieben. Hierbei soll an einem bestehenden Rohr eine Abzweigung angebracht werden, die leicht anzubringen und mit einfachen Hilfsmitteln zu befestigen ist. Dazu wird vorgeschlagen, daß an der Außenfläche des Rohrabzweiges eine Anzahl am Umfang verteilter, widerhakenförmiger Elemente angebracht sind. Beim Eindrücken dieses Rohrabzweiges in die Öffnung des zu verbindenden Rohres hintergreifen die widerhakenförmigen Elemente die Wand dieses Rohres. Dadurch wird der zwischen dem Flansch des Rohrabweiges und der Außenfläche der Wand des zu verbindenden Rohres befindliche Abdichtungsring verpreßt, so daß damit eine nicht mehr lösbare und einwandfrei abgedichtete Verbindung erhalten wird.

Nachteilig hierbei wird jedoch gesehen, daß die Öffnung in dem zu verbindenden Rohr sehr genau und präzise herausgetrennt werden muß, da sonst die widerhakenförmigen Elemente des Rohrabzweiges keine ausreichende Fläche zum Hintergreifen haben. Durch diese Art der Verbindungsherstellung ragt ein nicht unbeträchtlicher Teil des Rohrabzweiges in das Lumen des zu verbindenden Rohres hinein und reduziert damit unvorteilhafterweise die Durchflußfläche des zu verbindenden Rohres. Des weiteren kann dieser Rohrabzweig nur für die Schaffung von rechtwinklig zueinander verlaufenden Rohren verwendet werden.

Hier setzt die Erfindung ein, die es sich zur Aufgabe gestellt hat, die Nachteile des bekannten Standes der Technik dahingehend zu verbessern, daß mit dem erfindungsgemäßen Rohrformteil eine einfach zu schaffende und damit kostengünstige, dauerhaft dichte Abzweigung geschaffen wird, die es ermöglicht, Rohre mit unterschiedlich zueinander verlaufenden Winkelstellungen zu verbinden.

Erfindungsgemäß wird dazu vorgeschlagen, daß die Öffnung im Rohrformteil eine Ellipsenform aufweist, die an ihrem einen freien Ende von einer in den Abmessungen größeren Halbellipse überlagert ist, daß um die Halbellipse eine Wulst einstückig in das Lumen des Rohrformteils ragend angeformt ist, deren Höhe wenigstens der Wandstärke des Rohres entspricht und deren Dicke von den Eckpunkten zum Scheitel kontinuierlich abnimmt, wobei ihr äußerer Umfang wenigstens einem Halbkreis entspricht, daß die Wulst mit ihrem äußeren Umfang an der Wandung der Rohröffnung anliegt, und daß der in das Lumen des Rohres hineinragende Teil der Wulst mit einem Radius versehen ist.

Vorteilhaft hierbei ist, daß die Wulst das Rohrformteil radial in der Öffnung des zu verbindenden Rohres fixiert.

Durch die gewählte sattelförmige Geometrie des Unterteiles des Rohrformteiles wird vorteilhafterweise eine Haltefunktion durch die Umklammerung erzielt, wobei gleichzeitig die Kraft zur Montage des Rohrformteiles minimiert ist. Der in das Lumen des zu verbindenden Rohres hineinragende Teil der Wulst, der mit dem Radius versehen ist, gewährleistet einen gleichmäßigen Übergang vom Rohrformteil zu dem zu verbindenden Rohr, so daß es hier vorteilhafterweise möglich ist, neben dem Durchfluß von Medien auch Kabel und dergleichen zu verlegen.

Das erfindungsgemäße axiale Fixierelement am Scheitelpunkt der Öffnung im Rohrformteil garantiert im Zusammenhang mit der Wulst eine axiale Fixierung.

Durch den Radius auf dem in das Lumen des Rohres hineinragenden Teil der Wulst, der Höhe der Wulst und der Höhe des axialen Fixierelementes ist es möglich, Abzweige an Rohre verschiedenster Durchmesser und Wandstärken herzustellen. Die Winkelstellung des wegragenden Rohrstückes zu dem zu verbindenden Rohr ist frei wählbar.

Die Öffnung in dem zu verbindenden Rohr wird mit einem separaten Werkzeug hergestellt, ohne daß Späne oder andere Reste in das Lumen des zu verbindenden Rohres hineingeraten. Die sattelförmige Geometrie des Unterteiles sowie die Wandstärke des kompletten Rohrformteiles wurde so optimiert, daß ein minimaler Materialeinsatz und damit maßgebliche Kostenvorteile gegenüber dem bekannten Stand der Technik realisiert werden können.

Im folgenden soll nun die Erfindung anhand schematischer Darstellungen beschrieben werden. Es zeigt:
- Figur 1: eine Ansicht von unten auf das Rohrformteil.
- Figur 2: eine Seitenansicht mit partieller Schnittdarstellung des Rohrformteiles und eines Rohres.

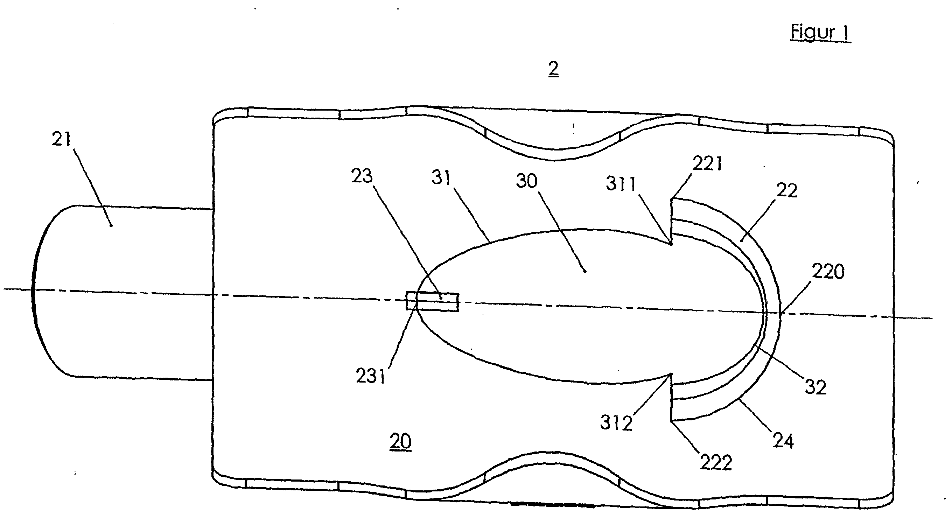

Das Rohrformteil 2 ist in Figur 1, bestehend aus dem Unterteil 20 und dem wegragenden Rohrstück 21, dargestellt. An der Innenwand des Unterteiles 20 des Rohrformteiles 2 ist die Öffnung 30 dargestellt, die eine Ellipsenform 31 aufweist. An den freien Enden der Ellipse 311, 312 wird diese durch eine größere Halbellipse 32 überlagert. Um die Halbellipse 32 ist die Wulst 22 dargestellt, die in das Lumen des Rohrformteiles 2 hineinragt. Der äußere Umfang 24 der Wulst 22 entspricht einem Halbkreis. Die Dicke der Wulst 22 nimmt von den Eckpunkten 221, 222 zum Scheitelpunkt 220 kontinuierlich ab. Diametral zu der an der Halbellipse 32 befindlichen Wulst 22 ist ein Fixierelement 23 einstückig am Scheitelpunkt 231 der Ellipse 31 angeformt.

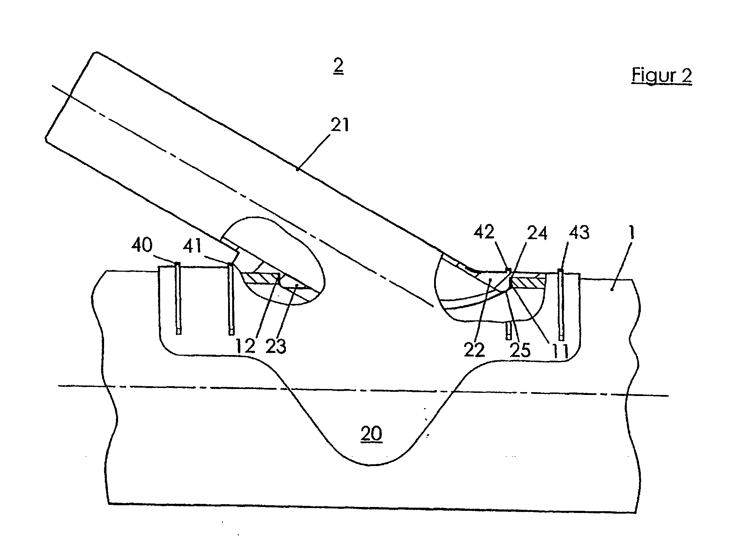

Figur 2 zeigt eine Verbindung zwischen dem Rohr 1 und dem Rohrformteil 2. Dabei ist erkennbar, daß das Unterteil 20 des Rohrformteiles 2 das Rohr 1 umgreift und das Oberteil 21 des Rohrformteiles 2 von dem Rohr 1 unter einem bestimmten Winkel wegragt.

Die Wulst 22 liegt mit ihrem äußeren halbkreisförmigen Umfang 24 direkt an der Wandung 11 der Rohröffnung des Rohres 1 an. Die Höhe der Wulst 22 entspricht in dieser Ausführungsform der Wandstärke des Rohres 1. Der in das Lumen des Rohres 1 hineinragende Teil der Wulst 22 des Rohrformteiles 2 ist mit einem Radius 25 versehen.
Auf der linken Seite der Figur 2 ist das axiale Fixierelement 23 erkennbar, welches in dieser Ausführungsform dreieckförmig gewählt wurde und das diametral zur Wulst 22 an der Wandung 12 der Rohröffnung des Rohres 1 anliegt. Damit ist eine axiale Verschiebung des Rohrformteiles 2 auf dem Rohr 1 nicht möglich.

Zur zusätzlichen Absicherung des Rohrformteiles 2 auf dem Rohr 1 sind am Rohrunterteil 20 die umlaufenden Kragen 40, 41 und 42, 43 einstückig angebracht, zwischen denen jeweils ein Spannband umlaufend befestigt werden kann.

## Patentansprüche

1. Verbindung eines Rohrformteils mit einem Rohr, wobei in das Rohr eine Öffnung eingebracht ist, die deckungsgleich zu einer Öffnung im Rohrformteil ist, wobei an das Rohrformteil ein von dieser Öffnung wegragendes Rohrstück angeformt ist, und wobei das Rohrformteil an dem das Rohr umgreifenden Umfang offen ist,
**dadurch gekennzeichnet,**
**daß** die Öffnung (30) im Rohrformteil (2) eine Ellipsenform (31) aufweist, die an ihrem einen freien Ende von einer in den Abmessungen größeren Halbellipse (32) überlagert ist, daß um die Halbellipse (32) eine Wulst (22) einstückig in das Lumen des Rohrformteiles (2) ragend angeformt ist, deren Höhe wenigstens der Wandstärke des Rohres (1) entspricht und deren Dicke von den Eckpunkten (221, 222) zum Scheitel (220) kontinuierlich abnimmt, wobei ihr äußerer Umfang (24) wenigstens einem Halbkreis entspricht, daß die Wulst (22) mit ihrem äußeren Umfang (24) an der Wandung (11) der Rohröffnung anliegt, und daß der in das Lumen des Rohres (1) hineinragende Teil der Wulst (22) mit einem Radius (25) versehen ist.

2. Verbindung nach Anspruch 1, **dadurch gekennzeichnet, daß** diametral zu der Wulst (22) der Halbellipse (32) ein axiales Fixierelement (23) einstückig am Scheitelpunkt (231) der Ellipse (31) im Rohrformteil (2) angeformt ist.

## Claims

1. Connection of a pipe fitting to a pipe, in which an opening is made in the pipe which is identical with the opening in the pipe fitting, in which a section of pipe projecting away from this opening is an integral part of the pipe fitting and in which the pipe fitting is open at the surface encompassing the pipe,
**characterised by**:
the opening (30) in the pipe fitting (2) has an elliptical shape, the dimensions of the free end of which are superimposed by a larger semiellipse (32), that a bulge (22) is formed in one piece into the internal diameter of the pipe fitting (2), the height of which corresponds to at least the wall thickness of the pipe (1) and the thickness of which is reduced continuously from the corner points (221, 222) to the apex (220), in which the outer circumference (24) is at least semicircular, that the bulge (22) lies with its outer circumference (24) against the walls (11) of the pipe opening and that the part of the bulge (22) projecting into the inside diameter of the pipe (1) is formed to a radius (25).

2. Connection as specified in Claim 1, **characterised by**: an axial fixing element (23) is attached in one piece at the apex (231) of the ellipse (31) in the pipe fitting (2) diametrically to the bulge (22) of the semiellipse (32).

## Revendications

1. Assemblage d'un raccord avec un tube, une ouverture étant aménagée dans le tube en se recouvrant avec une ouverture dans le raccord, une tubulure étant formée sur le raccord en s'écartant de cette ouverture et le raccord étant ouvert sur la périphérie entourant le tube
**caractérisé en ce que**
l'ouverture (30) présente une forme elliptique (31) dans le raccord (2), à laquelle se superpose, à l'une de ses extrémités libres, une demi-ellipse (32) de dimensions plus grandes, **en ce qu'**un bourrelet (22) est formé en saillie d'un seul tenant autour de la demi-ellipse (32) dans la lumière du raccord (2), sa hauteur étant au moins égale à l'épaisseur de paroi du tube (1) et son épaisseur diminuant constamment des points d'angle (221, 222) vers le sommet (220), sa périphérie (24) représentant au moins un demi-cercle, **en ce que** la périphérie extérieure (24) du bourrelet (22) contacte la paroi (11) de l'ouverture du tube et **en ce que** la partie du bourrelet (22) pénétrant dans la lumière du tube (1) comporte un rayon (25).

2. Assemblage selon la revendication 1, **caractérisé en ce que**, diamétralement au bourrelet (22) de la demi-ellipse (32), un élément de fixation axial (23) est formé en un seul tenant au sommet (231) de l'ellipse (31) dans le raccord (2).
